# EUROPÄISCHE PATENTSCHRIFT

(11) **EP 0 963 276 B1**
(45) Veröffentlichungstag und Bekanntmachung des Hinweises auf die Patenterteilung: **17.10.2001**
(21) Anmeldenummer: 98904052.2
(22) Anmeldetag: 10.01.1998
(51) Int. Cl.: B23Q 3/155, B23Q 3/157

(54) **BEARBEITUNGSZENTRUM**
MACHINING CENTRE
CENTRE D'USINAGE

(30) Priorität: 28.02.1997 DE 19708096
(43) Veröffentlichungstag der Anmeldung: 15.12.1999
(73) Patentinhaber: Hüller Hille GmbH, 71636 Ludwigsburg (DE)
(72) Erfinder: HORN, Wolfgang, D-74385 Pleidelsheim (DE); GEIGER, Dietrich, D-71723 Grossbottwar (DE)
(74) Vertreter: Dahlkamp, Heinrich-Leopold, Dipl.-Ing.
(86) Internationale Anmeldenummer: EP9800113
(87) Internationale Veröffentlichungsnummer: WO9838006

(56) Entgegenhaltungen:
- EP-A- 0 079 546
- DE-A- 4 027 894
- DE-A- 4 446 963
- DE-C- 3 720 180
- GB-A- 2 101 028
- JP-A- 61 038 840
- JP-A- 61 284 344

## Beschreibung

Die Erfindung bezieht sich auf Bearbeitungszentrum, wobei mindestens eine Arbeitsspindel mit vorzugsweise waagerechter Spindellage vorzugsweise in X-, Y- und Z-Richtung verfahrbar ist und jeder Arbeitsspindel mindestens ein im wesentlichen kreisförmiger, um eine zentrale Achse drehbarer Werkzeugspeicher mit Speicherplätzen zur Ablage des oder der Werkzeuge durch die Arbeitsspindel(n) zugeordnet ist.

Zum Stand der Technik gehören zweispindlige CNC-Bearbeitungszentren (vgl. z.B. Prospekt Hüller Hille, nb-h twin) mit automatischem Werkzeugwechsler, wobei seitlich neben den Arbeitsspindeln ein oder zwei um eine zentrale waagerechte Achse drehbare Werkzeugmagazinscheiben angeordnet sind. Die Drehachse dieser Werkzeugmagazinscheiben ist parallel zur Längsachse der Arbeitsspindeln (Spindelachse) angeordnet. Am äusseren Umfang der Werkzeugmagazinscheiben sind dabei Aussparungen zur Aufnahme der Werkzeuge angeordnet, deren Längsachsen ebenfalls parallel zur Drehachse der Werkzeugmagazinscheiben und der Arbeitsspindeln verlaufen. Diese bekannten Werkzeugmagazinscheiben benötigen relativ viel Platz und können nur eine begrenzte Anzahl von Werkzeugen aufnehmen.

Aus der DE 195 14 058 A1 ist eine Werkzeugmaschine mit mehreren Spindeln für die gleichzeitige oder unterschiedliche, getrennte Bearbeitung mehrerer Werkstücke bekannt, wobei mindestens zwei um ihre Drehachsen antreibbare Spindeln zumindest in ihrer Längsachse (C-Richtung) und in einer Querrichtung dazu (X-Richtung) verfahrbar sind.

Den vertikal angeordneten Spindeln ist ein gemeinsamer Mehrfachrevolver zugeordnet, der mit beiden Werkzeugspindeln zugeordneten Werkzeugen bestückt ist. Der Werkzeugrevolver besteht aus einer im wesentlichen kreisförmigen Scheibe, auf dem am Umfang die Werkzeuge mit ihrer Spitze radial nach außen angeordnet sind. Der Werkzeugrevolver ist um eine gegenüber der Waagerechten geringfügig geneigte Achse drehbar. Auch hierbei können nur relativ wenige Werkzeuge auf dem Werkzeugrevolver angeordnet werden.

Der Erfindung liegt die Aufgabe zugrunde, ein gattungsgemäßes Bearbeitungszentrum vorzugschlagen, das einen Werkzeugspeicher mit hoher Speicherdichte bzw. mit einer erheblich größeren Werkzeuganzahl besitzt, wobei die Werkzeuge auf einfache Weise direkt von der Arbeitsspindel ablegbar sind.

Die Lösung dieser Aufgabe ist im Anspruch 1 angegeben. Die Unteransprüche 2 bis 7 enthalten sinnvolle ergänzende Ausführungsformen dazu.

Der erfindungsgemäße Werkzeugspeicher besteht bei z.B. waagerechter Spindellage aus mehreren übereinander angeordneten Werkzeugscheiben mit einer gemeinsamen vertikalen Drehachse und am Umfang der einzelnen Werkzeugscheiben angeordneten Werkzeughaltern. Der als sogenannter Trommelspeicher ausgebildete Werkzeugspeicher wird in der Nähe der Arbeitsspindeln so angeordnet, dass möglichst allein durch Verfahren der Arbeitsspindeln die Werkzeuge radial oder im wesentlichen radial nach innen gerichtet von außen in die Werkzeughalter eingeschoben bzw. aus diesen Werkzeughaltern herausgenommen werden können. Durch einfaches Drehen des Trommelspeichers um die senkrechte Achse können dabei sämtliche am Umfang einer Werkzeugscheibe angeordneten Werkzeughalter für die Spitze der Arbeitsspindel zugänglich gemacht werden. Bei z.B. mehreren übereinander angeordneten Arbeitsspindeln können diese gleichzeitig die Werkzeughalter von zwei oder mehreren übereinander angeordneten Werkzeugscheiben anfahren. Da in der Regel die Werkzeugspitzen einen geringeren Durchmesser haben als die Halterungen für die Werkzeuge, können auf einer Werkzeugscheibe erheblich mehr Werkzeuge untergebracht werden, wobei der Platz optimal ausgenutzt werden kann.

Außerdem können praktisch unbegrenzt viele Werkzeugscheiben übereinander angeordnet werden.

Es hat sich darüber hinaus als günstig erwiesen, auf der Werkzeugscheibe oder dem Werkzeugspeicher zusätzlich auch Werkstückhalter zur Aufnahme von Werkstücken anzuordnen, wobei durch Drehen des Werkzeugspeichers sowohl die Werkzeughalter als auch die Werkstückhalter in eine Position gebracht werden können, dass sie direkt von der Spitze der Arbeitsspindel zugänglich sind. Dazu werden ein oder mehrere Werkzeugspeicher und gegebenenfalls auch ein oder mehrere Einrichtungen mit Werkstückhaltern auf einer Schwenk- oder Drehvorrichtung oder einem NC-Drehtisch angeordnet. Vorteilhaft können mehrere Speicher für Werkzeuge und/oder Werkstücke auf einem Drehtisch angeordnet sein, wobei jeweils ein Speicher für die Arbeitsspindeln zugänglich ist und z.B. ein anderer Speicher sich in einer Position zur Be- und Entladung der Werkzeuge und/oder Werkstücke befindet. Werkstückhalter und Werkzeughalter können auch in ihren Positionen, vorzugsweise auf einer Werkzeugscheibe gegeneinander austauschbar sein.

Erfindungsgemäß können weiterhin die Werkzeugspeicher auch von einem Palettenschwenker für die Werkstücke oder von einem separaten NC-Drehtisch mit oder ohne Palettenschwenker aufnehmbar und/oder bewegbar sein.

Zur Erhöhung der Bruchsicherheit hat es sich als günstig erwiesen, an den Werkzeug- und Werkstückhaltern Sollbruchstellen anzuordnen, damit bei eventuellen Bedienungsfehlern oder sonstigen Betriebsstörungen die gesamte Werkzeugscheibe oder auch der Trommelspeicher vor Beschädigungen geschützt wird.

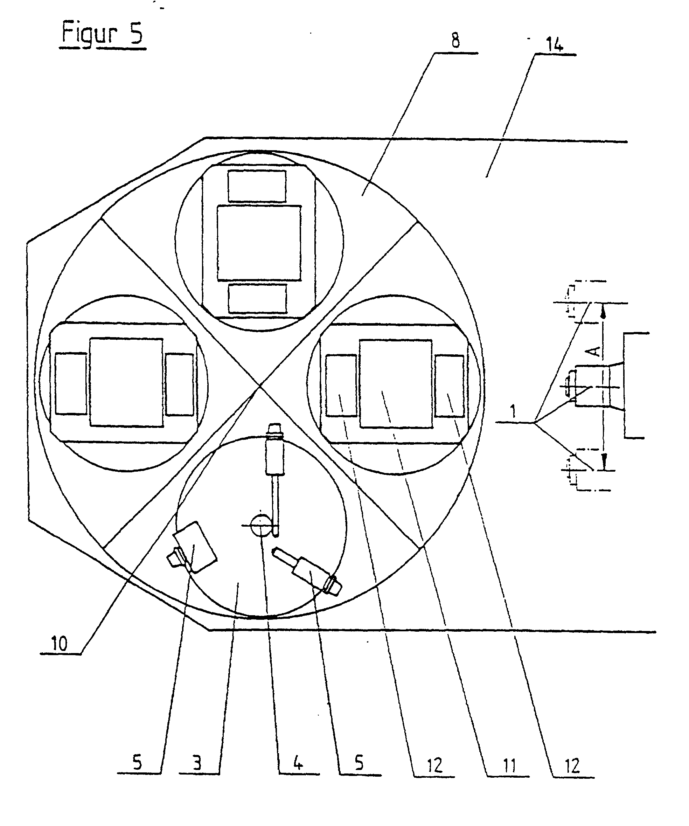

Die Erfindung wird anhand der beigefügten Figuren 1 bis 5 beispielsweise näher erläutert. Es zeigen
- Fig. 1: in der Seitenansicht einen erfindungsgemäßen Werkzeugspeicher,
- Fig. 2: eine Draufsicht zu Fig. 1,
- Fig. 3: eine Alternative zu Fig. 1, wobei zusätzlich Werkstücke 12 an Werkstückhaltern 11 dargestellt sind,
- Fig. 4: in der Draufsicht zwei Werkzeugspeicher, die auf einer Schwenk- oder Drehvorrichtung 9 um eine senkrechte Drehachse 10 drehbar sind und
- Fig. 5: in der Draufsicht die Anordnung von vier Speichern auf einem Drehtisch 8, wobei die Werkzeuge 5 auf einer Werkzeugscheibe 3 und die Werkstücke 12 an Werkstückhaltern 11 dargestellt sind.

In den Figuren ist jeweils nur die vordere Spitze einer Arbeitsspindel 1 dargestellt. Diese Arbeitsspindel 1 mit waagerechter Spindellage kann üblicherweise in einem senkrechten Viereckrahmen in senkrechter und/oder waagerechter Richtung (X- und Y-Richtung) um den Arbeitshub A verfahren werden. Darüber hinaus ist die Arbeitsspindel 1 für die Bearbeitung und auch zur Ablage der Werkzeuge 5 auf den Werkzeughaltern 7 in ihrer Längsrichtung (Z-Richtung) verfahrbar.

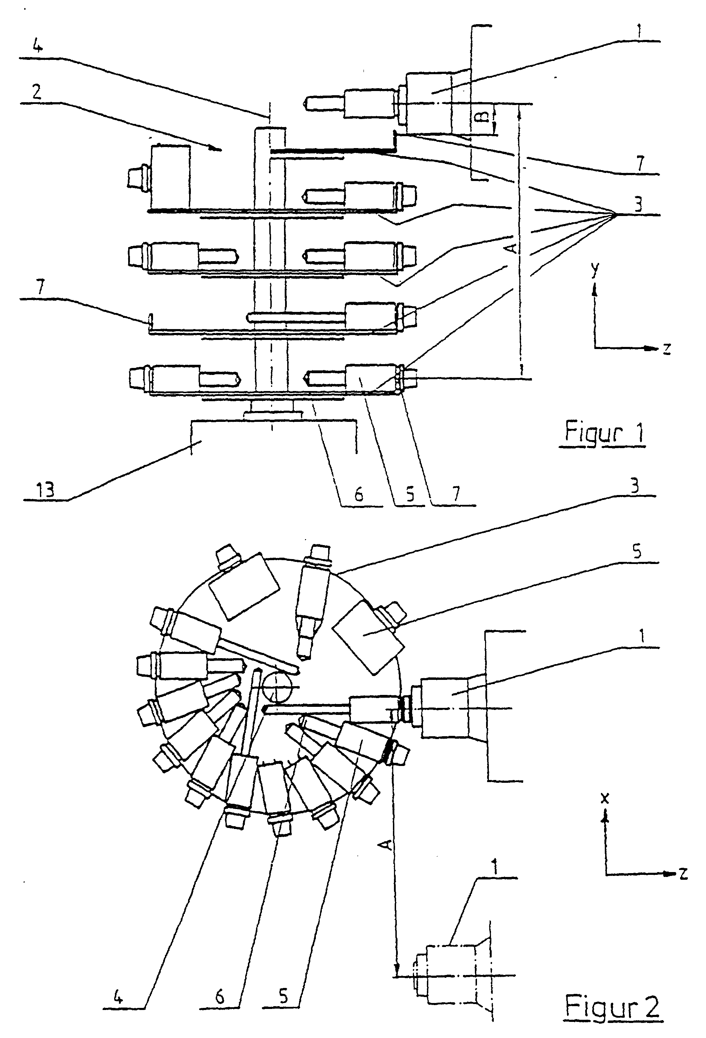

Außerhalb des Bereiches, in dem die Werkstücke 12 normalerweise bearbeitet werden, ist erfindungsgemäß der Werkzeugspeicher 2 angeordnet, der aus mehreren parallel übereinander angeordneten in der Regel kreisförmigen Werkzeugscheiben 3 besteht. Der turmartige Werkzeugspeicher 2 besitzt eine senkrechte, zentrale Drehachse 4. Bei der nicht dargestellten, aber auch zur Erfindung gehörigen senkrechten Spindellage der Arbeitsspindel 1 wäre diese zentrale Drehachse 4 waagerecht angeordnet. Jede Werkzeugscheibe 3 besitzt an ihrem äußeren Umfang eine Vielzahl von Werkzeughaltern 7 zur Aufnahme der Werkzeuge 5 oder auch der Werkstücke 12. Wie insbesondere aus Fig. 2 ersichtlich, sind die Werkzeuge 5 mit ihren Werkzeugspitzen 6 radial oder etwa radial nach innen gerichtet auf der Werkzeugscheibe 3 angeordnet. Da die Werkzeugaufnahmen in der Regel einen größeren Durchmesser haben als die Werkzeugspitze, können im Vergleich zu der Anordnung der Werkzeuge bei einem Werkzeugrevolver, bei dem die Werkzeugspitzen radial nach außen zeigen, auf dieser Werkzeugscheibe 3 erheblich mehr Werkzeuge 5 angeordnet werden. Für den Werkzeugwechsel wird erfindungsgemäß die Arbeitsspindel 1 zunächst in X- und Y-Richtung bis in die Position vor den jeweiligen Werkzeughalter 7 gefahren, dann in Z-Richtung zwischen die Werkzeugscheiben 3 bis über den Werkzeughalter 7 eingefahren und schließlich um einen kurzen Hub B in den gabelförmigen Werkzeughalter 7 abgesenkt. Nachdem die Werkzeugspannvorrichtung gelöst und die Arbeitsspindel zurückgefahren ist, wird der Werkzeugspeicher 2 um seine Drehachse 4 soweit gedreht, bis die Arbeitsspindel 1 ein neues Werkzeug 5 greifen kann.

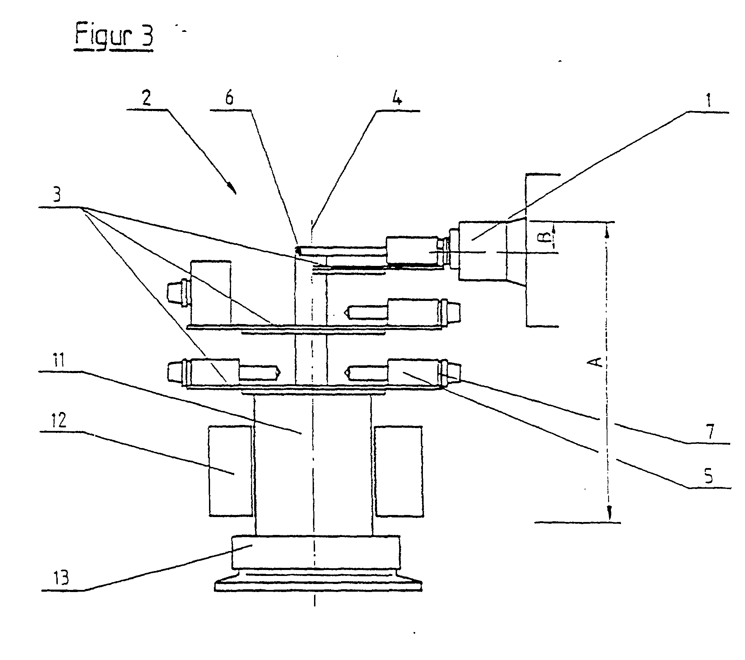

Nach Fig. 3 sind auf dem Werkzeugspeicher 2 neben den Werkzeugscheiben 3 zusätzlich Werkstückhalter 11 mit geeigneten Werkstückspannvorrichtungen angeordnet, sodass radial von außen die Werkstücke 12 eingesetzt und auch mit Hilfe der an der Arbeitsspindel 1 angeordneten Werkzeuge 5 dort direkt bearbeitet werden können.

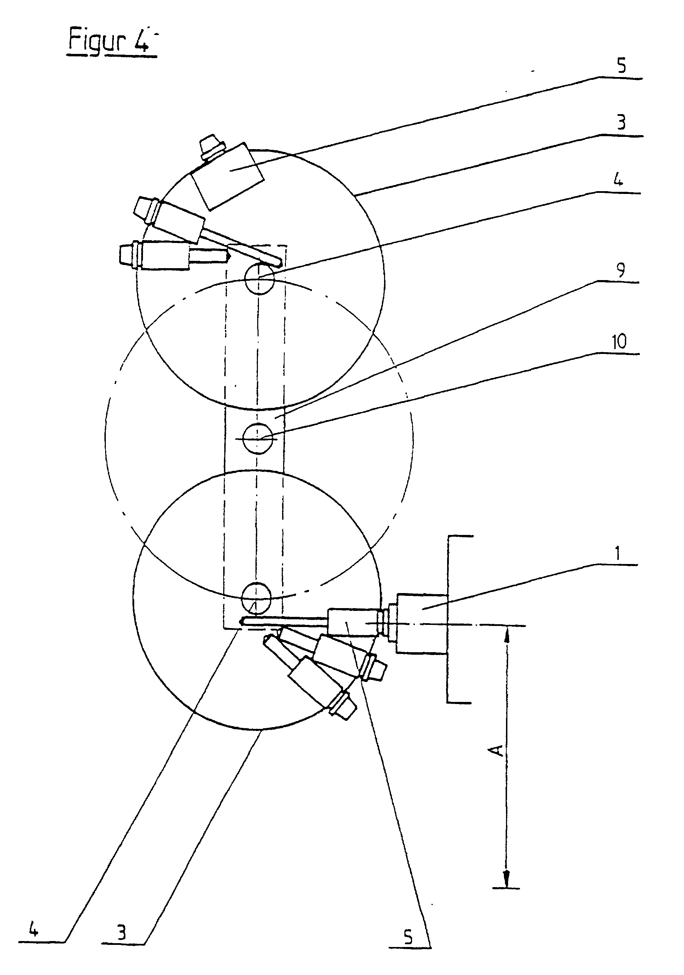

Jeder Werkzeugspeicher 3 ist auf einer Befestigungseinrichtung 13 über die Drehachse 4 gelagert. Diese Befestigungseinrichtungen 13 können wiederum auf einer Schwenk- oder Drehvorrichtung 9 (vgl. Fig. 4) oder auf einem Drehtisch 8 befestigt sein, wobei Drehtisch 8 und Schwenk- oder Drehvorrichtung 9 auf einer Grundplatte 14 um die senkrechte Drehachse 10 drehbar gelagert sind.

In den Figuren ist jeweils nur eine Arbeitsspindel 1 dargestellt. Es können aber auch mehrere parallel zueinander angeordnete Arbeitsspindeln vorhanden sein, die vorzugsweise gleichzeitig ein oder mehrere Werkstücke bearbeiten und vor allem auch gleichzeitig ihre Werkzeuge 5 von den Werkzeughaltern 7 auf verschiedenen übereinander angeordneten Werkzeugscheiben 3 aufnehmen bzw. an diese abgeben.

### Bezugszeichenliste:

- 1: Arbeitsspindel
- 2: Werkzeugspeicher, Trommelmagazin
- 3: Werkzeugscheibe
- 4: senkrechte, zentrale Drehachse von 2 bzw. 3
- 5: Werkzeuge
- 6: Werkzeugspitze
- 7: Werkzeughalter
- 8: Drehtisch
- 9: Schwenk- oder Drehvorrichtung
- 10: Drehachse von 8 bzw. 9
- 11: Werkstückhalter, Werkstückspannvorrichtung
- 12: Werkstück
- 13: Befestigungseinrichtung
- 14: Grundplatte

- A: Arbeitshub von 1
- B: Hub von 1 zur Ablage bzw. Aufnahme von 5

## Patentansprüche

1. Bearbeitungszentrum, wobei mindestens eine Arbeitsspindel mit vorzugsweise waagerechter Spindellage vorzugsweise in X-, Y- und Z-Richtung verfahrbar ist und jeder Arbeitsspindel mindestens ein im Wesentlichen kreisförmiger, um eine zentrale Achse drehbarer Werkzeugspeicher mit Speicherplätzen zur Ablage des oder der Werkzeuge durch die Arbeitsspindel(n) zugeordnet ist, **dadurch gekennzeichnet, dass**
a) der Werkzeugspeicher (2) aus einer Werkzeugscheibe (3) oder aus mehreren parallel zueinander angeordneten, zu einem Trommelspeicher zusammengefassten Werkzeugscheiben (3) besteht, wobei
b) die Werkzeugscheibe(n) (3) einzeln oder gemeinsam um eine zentrale, senkrecht zur Spindelachse angeordnete Achse (4) drehbar ist (sind),
c) die Werkzeuge (5) mit der Werkzeugspitze (6) voran von außen nach innen gerichtet in Werkzeughalter (7) des Werkzeuspeichers (2) einschiebbar sind, wobei
d) die Mittelachsen der Werkzeughalter (7) an der zentralen Drehachse (4) des Werkzeugspeichers (2) vorbei verlaufen.

2. Vorrichtung nach Anspruch 1, **dadurch gekennzeichnet, dass** auf der Werkzeugscheibe (3) auch Werkstückhalter (11) angeordnet sind.

3. Vorrichtung nach Anspruch 1 oder 2, **dadurch gekennzeichnet, dass** ein oder mehrere Werkzeugspeicher (2) auf einer Schwenk- oder Drehvorrichtung (9) oder einem Drehtisch (8) angeordnet sind.

4. Vorrichtung nach Anspruch 1, 2 oder 3, **dadurch gekennzeichnet, dass** ein oder mehrere Werkzeugspeicher (2) gemeinsam mit ein oder mehreren Werkstückhaltern (11) auf einer Schwenk- oder Drehvorrichtung (9) oder einem Drehtisch (8) angeordnet sind.

5. Vorrichtung nach mindestens einem der vorhergehenden Ansprüche, **dadurch gekennzeichnet, dass** Werkzeughalter (7) und Werkstückhalter (11) gegeneinander austauschbar sind.

6. Vorrichtung nach mindestens einem der vorhergehenden Ansprüche, **dadurch gekennzeichnet, dass** zur Erhöhung der Bruchsicherheit an den Werkzeughaltem (7) Sollbruchstellen angeordnet sind.

7. Vorrichtung nach mindestens einem der vorhergehenden Ansprüche, **dadurch gekennzeichnet, dass** der Werkzeugspeicher (2) von einem Palettenschwenker für die Werkstücke oder von einem separaten NC-Drehtisch mit oder ohne Palettenschwenker aufnehmbar und/oder bewegbar ist.

## Claims

1. Machining centre, wherein at least one work spindle with a preferably horizontal spindle position can be displaced preferably in the direction of X, Y and Z and each work spindle is allocated at least one substantially circular tool store which can rotate around a central axis and which is provided with storage locations so that the working spindle(s) can deposit one or several tools, **characterised in that**
a) the tool magazine (2) consists of a tool disk (3) or a plurality of tool disks (3) which are arranged in parallel to one another and comprised in a turret-like magazine while
b) the tool disk(s) (3) is (are) rotatable individually or together around an axis (4) arranged vertically and centrally to the spindle axis,
c) the tools (5) can be inserted tool tip (6) first into the tool holder (7) of the tool magazine (2) from the outside to the inside while
d) the central axes of the tool holders (7) do not intersect the central axis of rotation (4) of the tool magazine (2).

2. Device in accordance with Claim 1, **characterised in that** there are also work holders (11) arranged on the tool disk (3).

3. Device in accordance with Claim 1 or 2, **characterised in that** one or more tool magazines (2) are arranged on a swinging or rotating device (9) or on a turntable (8).

4. Device in accordance with Claim 1, 2 or 3, **characterised in that** one or more tool magazines (2) are arranged on a swinging or rotating device (9) or on a turntable (8) together with one or more work holders (11).

5. Device in accordance with at least one of the preceding claims, **characterised in that** the tool holder (7) and the work holder (11) can be interchanged with one another.

6. Device in accordance with at least one of the preceding claims, **characterised in that** predetermined breaking points are arranged on the tool holders (7) to increase the security against fracture.

7. Device in accordance with at least one of the preceding claims, **characterised in that** the tool magazine (2) can be taken-up and/or moved by a pallet swinging device for the works or by a separate NC turntable with or without a pallet swinging device.

## Revendications

1. Centre d'usinage, une broche de travail au moins avec de préférence une position de broche horizontale étant déplaçable de préférence dans le sens X, Y et Z et au moins un magasin à outils, de forme essentiellement circulaire et pivotable autour d'un axe central, avec des places de stockage pour le dépôt de l'outil ou des outils par la ou les broches(s) de travail étant affecté à chaque broche de travail, **caractérisé en ce que**
a) le magasin à outils (2) est constitué d'un disque à outils (3) ou de plusieurs disques à outils (3) disposés parallèlement les uns aux autres pour former un magasin tambour,
b) le disque ou les disques à outils (3) étant pivotable(s) individuellement ou en commun autour d'un axe (4) central disposé verticalement par rapport à l'axe de la broche et
c) les outils (5) pouvant être enfoncés dans le porte-outil (7) du magasin à outils (2) en étant dirigés de l'extérieur vers l'intérieur avec la pointe d'outil (6) en avant,
d) les axes centraux des porte-outils (7) passant devant l'axe de rotation central (4) du magasin à outils (2).

2. Dispositif selon la revendication 1, **caractérisé en ce que** des porte-pièces (11) sont également disposés sur le disque à outils (3).

3. Dispositif selon la revendication 1 ou 2, **caractérisé en ce qu'**un ou plusieurs magasins à outils (2) sont disposés sur un dispositif de pivotement ou de rotation (9) ou sur une table tournante (8).

4. Dispositif selon la revendication 1, 2 ou 3, **caractérisé en ce qu'**un ou plusieurs magasins à outils (2) sont ordonnés en commun avec ou plusieurs porte-pièces (11) sur un dispositif de pivotement ou de rotation (9) ou sur une table tournante (8).

5. Dispositif selon au moins l'une des revendications précédentes, **caractérisé en ce que** les porte-outils (7) et les porte-pièces (11) peuvent être interchangés.

6. Dispositif selon au moins l'une des revendications précédentes, **caractérisé en ce que** des points disposés à la rupture (7) sont disposés au niveau des porte-outils (7) pour augmenter la résistance à la rupture.

7. Dispositif selon au moins l'une des revendications précédentes, **caractérisé en ce que** le magasin à outils (2) peut être pris ou déplacé par un dispositif de pivotement de palettes pour les pièces ou par une table pivotante à contrôle numérique séparée avec ou sans dispositif de pivotement de palettes
